# EUROPEAN PATENT APPLICATION

(11) **EP 1 829 796 A1**
(43) Date of publication of application: **05.09.2007**
(21) Application number: 05811304.4
(22) Date of filing: 30.11.2005
(51) Int. Cl.: B65D 83/00

(54) **CARTRIDGE FOR VISCOUS FLUID OBJECT**

(30) Priority: 01.12.2004 JP 2004349075
(71) Applicant: Nakayama Industries, Ltd., Miyoshi-machi Iruma-gun, Saitama, 354-0043 (JP); Dow Corning Toray Co., Ltd., Tokyo 100-0005 (JP)
(72) Inventor: NAKAYAMA, Tohru, NAKAYAMA INDUSTRIES, LTD., Iruma-gun, Saitama 354-0043 (JP); MORI, Hideyuki, DOW CORNING TORAY CO., LTD., Awara-shi, Fukui 919-0603 (JP)
(74) Representative: Needle, Jacqueline
(86) International application number: PCT/JP2005/021964
(87) International publication number: WO 2006/059628

(57) **Abstract**

A cartridge for storing and dispensing viscous fluid materials providing excellent productivity and gas barrier properties and free from external appearance defects at the site of film wrapping. The inventive cartridge for viscous fluid materials has a plunger 3 inserted into the bottom portion of a cartridge body 2 fabricated using insert injection molding by integrally molding a cylindrical barrel portion 5 of a multilayer structure produced by laminating a gas barrier layer 8 including a metal thin layer 8a on the exterior periphery or interior periphery of a plastic layer 7, and a lid 6 covering the top of said cylindrical barrel portion.

## Description

### Technical Field

The present invention relates to a cartridge used for storing viscous fluid materials, and, especially suitably, moisture-curable compositions such as sealing agents, and dispensing the materials onto surfaces to be coated at the moment of use.

### Background Art

Well-known containers used for storing sealing agents include plastic cartridges obtained by molding a lid having a discharge outlet integrally with the top end of a barrel portion made of plastic and, after filling it with a sealing agent, installing a plunger in the opening in the lower end of the barrel portion. Although polyethylene is typically used as the material used for the barrel portion and lid and the thickness of the barrel portion walls, with account taken of the required strength, weight, economic efficiency, etc., is normally set to 1-1.5 mm, due to the characteristics of the material and the pinholes formed during molding, the walls exhibit a certain degree of air permeability and their outside air-barrier properties are imperfect.

The use of such containers as containers for moisture-curable sealing agents has led to various problems associated with the penetration of outside air, and, in particular, permeation of moisture (water) inside the containers. For instance, sealing agent curing occurs in the portion, where the sealing agent comes into contact with the surface of the interior walls of the barrel portion and in the portion around the plunger, as a result of which storage life deteriorates, the nonconforming article percentage increases, and dispensing the sealing agent using the plunger becomes difficult. In addition, if the temperature of adherends such as glass plates, metal plates, metal sash, etc. is elevated, applying a sealing agent that has been stored in the container for an extended period of time to said adherends results in the formation of air bubbles at the interface between the sealing and the adherends.

Japanese Patent Application Publication (JP-A) No. 2001-240154 and JP-A No. 2003-104461 describe plastic cartridges for sealing agents produced by wrapping a composite film comprising an aluminum film around the exterior periphery of a cylindrical barrel portion constituted by a plastic molding. In such cartridges, gas barrier properties are imparted and the storage life of the sealing agents inside is improved by wrapping a composite film including an aluminum film around the exterior periphery of the cylindrical barrel portion.

However, the manufacture of the cartridges described in JP-A No. 2001-240154 requires a composite film wrapping step separate from the step of molding of the cartridge body, and consequently its productivity is not very high.

Moreover, when the composite film is wrapped around the exterior periphery of the cylindrical barrel portion, external appearance is damaged because wrinkles tend to form easily and air remains in the wrinkled portions.

### Disclosure of Invention

With account taken of the above-described problems, it is an object of the invention to provide a cartridge for storing and dispensing viscous fluid materials offering excellent productivity and gas barrier properties and free from external appearance defects at the site of film wrapping.

To attain the above-mentioned object, the present invention provides a cartridge for viscous fluid materials, wherein a plunger used for dispensing contents filling a cartridge body is inserted in the bottom side of the cartridge body fabricated using insert injection molding by integrally molding a cylindrical barrel portion of a multilayer structure in which a gas barrier layer comprising a metal thin layer is laminated on the exterior periphery or interior periphery of a plastic layer used to maintain the shape and strength of the cylindrical barrel portion itself, and a lid covering the top of said cylindrical barrel portion.

According to an embodiment of the cartridge for viscous fluid materials provided by the present invention, a gas barrier layer comprising the above-mentioned metal thin layer may be laminated on the exterior periphery of the plastic layer of the above-mentioned cylindrical barrel portion.

According to another embodiment of the cartridge for viscous fluid materials provided by the present invention, the gas barrier layer comprising the metal thin layer and a layer producing no interaction with the contents or allowing no components from the contents to pass therethrough may be laminated on the interior periphery of the plastic layer of the cylindrical barrel portion.

Furthermore, in an embodiment having the gas barrier layer laminated on the interior periphery of the plastic layer of the cylindrical barrel portion, the cylindrical barrel portion and the lid portion may be formed using injection molding by injecting PE, the layer producing no interaction with the contents or allowing no components from the contents to pass therethrough may be formed from any one of polyesters, polyamides, polyacrylic resins, heat-curable epoxy resins, UV-curable epoxy resins, or mixed resins of two or more components selected therefrom, and the contents include at least one component selected from organic solvents, hydrocarbon oils, and ketones.

The inventive cartridge for viscous fluid materials offers high productivity because it permits integral molding of the cartridge body and the location of the gas barrier arranged in its cylindrical barrel portion using a single molding process.

In addition, because the cylindrical barrel portion of the cartridge body is enclosed in the gas barrier layer comprising a metal thin layer, it has excellent gas barrier properties, in particular, moisture barrier properties.

In the present invention, when the gas barrier layer is laminated on the exterior periphery of the plastic layer of the cylindrical barrel portion, the gas barrier layer is molded integrally with the cylindrical barrel portion of cartridge body by insert injection molding, as a result of which, unlike in case of wrapping a gas barrier film around the barrel portion, no external appearance defects are produced at the site of film wrapping because of wrinkles and residual air.

Moreover, when the gas barrier layer is laminated on the interior periphery of the plastic layer of the cylindrical barrel portion, even if the injection molding resin constituting the primary molding material of the cartridge body is a material that readily exhibits interaction with the contents, the plastic layer made up of the injection molding resin is protected from the contents by the gas barrier layer, thereby yielding a cartridge offering high durability to the contents or high storage stability for the contents.

The above-mentioned cartridge is suitable for use as a cartridge filled with a moisture-curable composition, such as a sealing agent, especially a silicone-, silicone modified-, or polyurethane-based sealing agent.

### Brief Description of Drawings

In the accompanying drawings,
Fig. 1 is an exploded perspective view illustrating an example of the inventive cartridge for viscous fluid materials;
Fig. 2 is a cross-sectional view illustrating an example of the inventive cartridge for viscous fluid materials; and
Fig. 3 is a cross-sectional view illustrating another example of the inventive cartridge for viscous fluid materials.
The reference numeral in each figure refers to the following: 1: cartridge, 2: cartridge body, 3: plunger, 4: nozzle, 5: cylindrical barrel portion, 6: lid, 7: plastic layer, 8: gas barrier layer, 8a: metal thin layer, 8b: bonding layer, 8c: outermost layer, 8d: metal thin layer, 8e: bonding layer, 8f: outermost layer, 9: cylindrical opening portion, 9a: Helical groove, 10: seal film, 11: pressure-application surface, and 12: cylindrical side surface.

### Best Mode for Carrying Out the Invention

The inventive cartridge for viscous fluid materials is a cartridge, wherein a plunger used for dispensing contents filling a cartridge body is inserted in the bottom side of the cartridge body fabricated using insert injection molding by integrally molding a cylindrical barrel portion of a multilayer structure in which a gas barrier layer comprising a metal thin layer is laminated on the exterior periphery or interior periphery of a plastic layer used to maintain the shape and strength of the cylindrical barrel portion itself, and a lid covering the top of said cylindrical barrel portion.

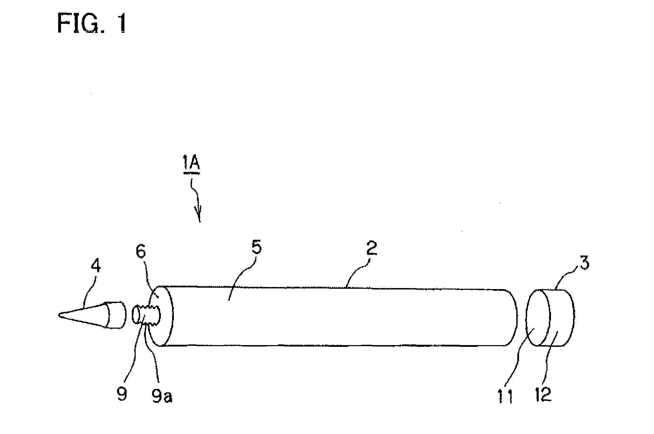

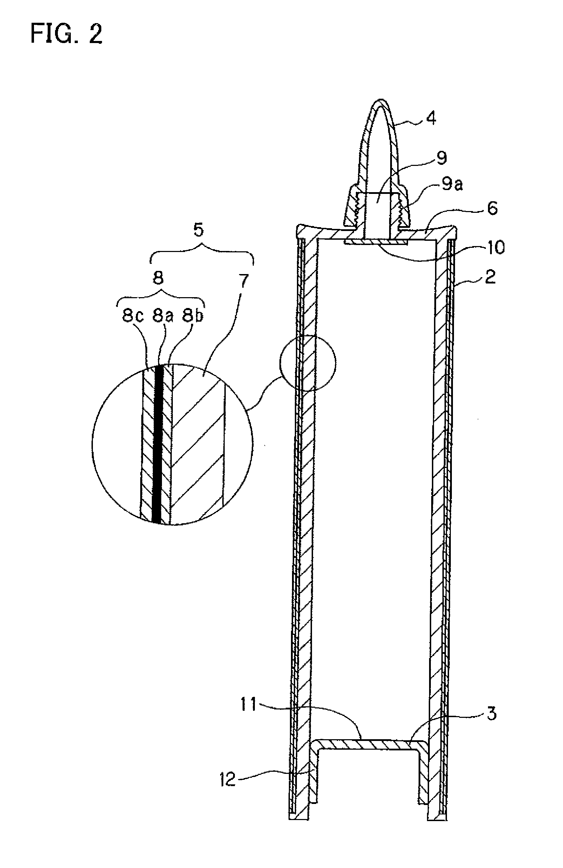

Fig. 1 and Fig. 2 show an exploded perspective view and a schematic cross-sectional view of an example of the present invention, wherein a cartridge, 1A, has a gas barrier layer laminated on the exterior periphery of the barrel portion of the cartridge body. As shown in Fig. 1, cartridge 1A is composed of a cartridge body 2, in which a lid 6 covers the top side of a cylindrical barrel portion 5; a plunger 3, which is inserted into the bottom of the cartridge body 2; and a nozzle 4, which is attached as the occasion demands.

Fig. 2 is a cross-sectional view of cartridge 1A with the plunger 3 and nozzle 4 installed in the cartridge body 2. The cylindrical barrel portion 5 of the cartridge body 2 has a multilayer structure produced by laminating, in the direction from the inside towards the outside on the exterior periphery of a plastic layer 7 used to maintain the shape and strength of the cylindrical barrel portion itself, a gas barrier layer 8 made up of a bonding layer 8b used for boding to the plastic layer, a metal thin layer 8a, and an outermost layer 8c. In addition, a protruding cylindrical opening portion 9 is formed in the center of the lid 6, a helical groove 9a is provided on the exterior periphery of the cylindrical opening portion for threaded engagement with the nozzle 4, and a suitable seal film 10 made of aluminum foil etc. is attached using an appropriate method, such as adhesion, fusion, etc., to the interior surface of the lid 6 in order to cover the cylindrical opening portion.

In the cartridge body 2, which is an integral molding formed using insert injection molding by arranging a gas barrier film serving as a gas barrier layer inside a mold in a location corresponding to the exterior periphery of the cylindrical body and injecting molten resin into the mold, the plastic layer 7 of the cylindrical barrel portion and lid portion 6 are made up of the resin injected into the mold and the gas barrier layer portion 8 is made up of the gas barrier film inserted into the mold.

The injection molding resin, which constitutes the primary molding material of the cartridge body 2, is subject to no particular limitations so long as it is a plastic material satisfying requirements in terms of the shape, strength and other physical properties required for the cartridge body and so long as it has the stability required to prevent interaction with the contents. In general, suitable resins include polyolefin resins, such as LDPE, HDPE, LLDPE, and other polyethylenes (PE), polypropylene, etc., as well as mixed resins comprising said polyolefin resins as the main ingredients.

In order to ensure gas barrier properties and, in particular, sufficient moisture barrier properties, the gas barrier film serving as the gas barrier layer of the cartridge body has at least a metal thin layer. Aluminum foil and aluminum deposition-layers are preferred as the metal thin layers, but foil and deposition-layers of other metallic materials may be used as well. It is only necessary for the gas barrier film to comprise a metal thin layer, which may be a single layer film made up of metal foil or a composite film where other layers are provided on one or both sides of a metal thin layer.

For instance, in order to firmly bond the injection molding resin to the gas barrier film, the gas barrier film is preferably a composite film, in which a bonding layer 8b made up of a resin exhibiting high adhesive properties with respect to the injection molding resin is provided on one side of a metal thin layer. Moreover, the gas barrier film may be represented by a composite film having an outermost layer 8c used for protecting the metal thin layer provided on one side of the metal thin layer. From the standpoint of adhesive properties, the same type of material as the material of the plastic layer (e. g. either one of LDPE, HDPE, or LLDPE in case of LDPE, HDPE, or LLDPE) is preferable for use in the bonding layer 8b. In addition, the outermost layer 8c may be formed from the same type of plastic material as the bonding layer 8b.

When PE is used as the injection molding resin, a suitable gas barrier film is obtained by laminating a PET layer with a thickness of 5-100 µm and a biaxially-oriented polypropylene layer (OPP layer) with a thickness of 5-100 µm, which serves as the outermost layer, on one side of aluminum foil with a thickness of 5-100 µm and laminating a PE layer with a thickness of 10-50 µm, which serves as the bonding layer, on the other side. Moreover, also suitable is a gas barrier film obtained by laminating an OPP layer with a thickness of 5-100µm serving as an outermost layer on one side of an aluminum deposition PET film produced by providing a 1-10 nm aluminum deposition-layer on one side of a PET base film with a thickness of 10-100 µm, and laminating a PE layer with a thickness of 10-50 µm serving as a bonding layer on the other side.

The thickness of the aluminum foil and aluminum deposition film is preferably within the above-described ranges, because in such a case few pinholes develop in the aluminum layer and its flexibility may not be impaired. In addition, the thickness of the PE layer is preferably within the above-described range because the bonding layer then may exhibit sufficient adhesion and may not be excessively thick.

A cartridge body with an outside diameter of 30 to 100 mm, a length of 150 to 250 mm (excluding the cylindrical opening portion), a wall thickness of 0.5 to 2 mm in the cylindrical barrel portion, and a lid thickness of 0.5 to 2 mm can be molded by inserting such a barrier film into a mold in the position corresponding to the exterior periphery of the cylindrical body and injecting molten PE into the mold. The name of the product and the contents, manufacture date, manufacturer, and other information can be indicated by printing it on the exterior periphery of the barrel portion of the cartridge body.

The plunger 3, which is inserted into the bottom portion of the cartridge body 2, has a pressure-application surface 11, which comes into contact with the contents, and a cylindrical side surface 12, which is tightly engaged with the interior surface of the cylindrical barrel portion 5 of the cartridge body 2 and is slidably movable therein in a fluid-tight manner when pressed inside the cartridge body. The plunger 3 is typically a bottomless hollow cylinder, with the piston of a dispensing implement, not shown, pressing against the hollow recessed portion thereof. There are no particular limitations concerning the material used for the plunger, which may be molded from the same plastic material as the cartridge body.

In addition, it is only necessary to install the nozzle 4 in the cylindrical opening portion 9 of the lid at the moment of use and it does not have to be installed when the cartridge is in storage. There are no particular limitations concerning the material used for the nozzle, which may be molded from the same plastic material as the cartridge body.

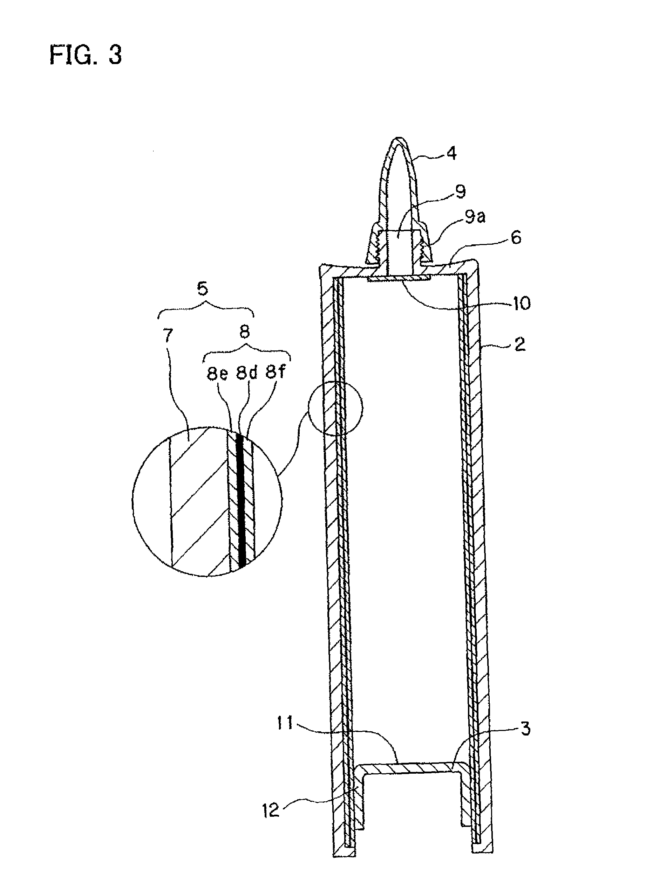

Fig. 3 is a schematic cross-sectional view of another example of the present invention, wherein a cartridge, 1B, has a gas barrier layer laminated on the interior periphery of the barrel portion of the cartridge body.

In the explanations of cartridge 1B provided below, explanations concerning portions common with cartridge 1A are omitted, with the explanations focusing mainly on the portions characteristic of cartridge 1B. In addition, for portions common with cartridge 1A, the same reference numerals are used in the figure illustrating cartridge 1B as in the figure illustrating cartridge 1A.

Although cartridge 1B has the same external appearance as cartridge 1A illustrated in the above-described Fig. 1, the cross-sectional structure of the barrel portion of the cartridge body is different from that of cartridge 1A.

Namely, as shown in Fig. 3, in the cartridge body 2 of cartridge 1B, the cylindrical barrel portion 5 has a multilayer structure produced by laminating, in the direction from the outside towards the inside on the interior periphery of a plastic layer 7 used for maintaining the shape and strength of the cylindrical barrel portion itself, a gas barrier layer 8 made up of a bonding layer 8e, which is used for bonding to the plastic layer, a metal thin layer 8d, and an innermost layer 8f.

In this case the cartridge body 2 is an integral molding formed using insert injection molding by arranging a gas barrier film serving as a gas barrier layer inside a mold in a location corresponding to the interior periphery of the cylindrical body and injecting molten resin into the mold, wherein the plastic layer 7 of the cylindrical barrel portion and the lid portion 6 are made up of the resin injected into the mold and the gas barrier layer portion 8 is made up of the gas barrier film inserted into the mold.

In general, if the injection molding resin used to form the plastic layer 7 of the cylindrical barrel portion of the cartridge body 2 is a material readily producing interaction with the contents (in other words, a material readily swelling in the presence of the contents, a material quickly deteriorating in the presence of the contents, or a material quickly dissolving in the contents and causing its deterioration), the swelling of the cartridge body 2 results in the leakage of the contents, imperfect engagement between the plunger and the body, and aeration of the contents, or, otherwise, contact between the injection molding resin and the contents causes the contents and the cartridge to deteriorate.

For instance, if solvents such as toluene, benzene, xylene, and other organic solvents; liquid paraffin and other hydrocarbon oils; acetone and other ketones are included in the contents, the resin of the cartridge body swells, gaps appear between the interior surface of the barrel portion and the pressing plunger fitted inside, the contents leak, and dispensing is unstable when applying pressure to the contents.

Moreover, if air is incorporated into the contents through such gaps between the interior surface of the barrel portion and the plunger, this may negatively affect the quality of the contents. For instance, if the content is a sealing agent, there may be a chance that moisture contained in the air may damage the stability of the contents and sealing may be defective due to the inclusion of air in the location where the contents are injected.

By contrast, contact between the plastic layer 7 of the cylindrical barrel portion and the contents is avoided by providing the gas barrier layer 8 on the interior periphery of the cylindrical barrel portion of the cartridge body 2 and, as a result, the occurrence of the above-described interaction is prevented and a cartridge is obtained that has high durability to the contents, or offers high storage stability for the contents.

If the metal thin layer of the gas barrier film is made up of metal foil, contact with the plastic layer 7 of the cylindrical barrel portion and the contents can usually be easily avoided. From the standpoint of further improving the durability of the container and the storage life of the contents, it is preferable to provide a layer that does not allow the contents to pass therethrough (in particular, organic solvents, hydrocarbon oils, and ketones in the contents) adjacent the metal thin layer or between the metal thin layer and another layer.

In the present invention, the expression "a layer producing no interaction with the contents or allowing no components from the contents to pass therethrough" means that a certain layer, which that does not cause any alteration of the contents or the container or degradation in the storage life of the contents or the durability of the container, does not produce any interaction with the entire formulation of the contents or any interaction with one, two, or more components in the formulation, and, even if the interaction does occur, the interaction does not present any problems in practical terms; and, that a layer does not allow any components from the contents to pass therethrough, or even if it does, it does not allow an amount to pass therethrough that would cause any alteration of the contents or the container or any degradation in the storage life of the contents or the durability of the container that would present problems in practical terms. In this sense, interaction or penetration at levels that can be ignored in practical use is permissible.

For instance, in cartridge 1B, the innermost layer 8f of the gas barrier layer 8 can be made chemically stable with respect to the components and solvents included in the contents filling the cartridge, or can be formed from resin that does not allow them to pass therethrough.

Resins suitable for the innermost layer are exemplified by polyethylene, polypropylene, and other polyolefins; Nylon-6, Nylon-6,6, and other polyamides; polyethylene terephthalate, polynaphthalates, and other polyesters; polyacrylic resins; and heat-curable and UV-curable epoxy resins, etc. Among them, polyester resins of superior solvent resistance and economic efficiency are preferable, and among these, polyethylene terephthalate is even more preferable.

When the gas barrier film is arranged on the interior of the barrel portion, the gas barrier film is preferably a composite film, in which the innermost layer is provided on one side of the metal thin layer and, on the other side, there is provided a bonding layer 8e made up of resin possessing high adhesive properties with respect to the injection molding resin in order to firmly bond the gas barrier film to the injection molding resin. From the standpoint of adhesive properties, the same type of material as the material of the plastic layer (e. g. either one of LDPE, HDPE, or LLDPE in case of LDPE, HDPE, or LLDPE) is preferable for use in the bonding layer 8e.

When PE is used as the injection molding resin, a gas barrier film is suitably used that is obtained by laminating a PET layer with a thickness of 5-100 µm and an OPP layer with a thickness of 5-100 µm serving as the innermost layer on one side of aluminum foil with a thickness of 5-100 µm and laminating a PE layer with a thickness of 10-50 µm serving as a bonding layer on the other side. Moreover, also suitable is a gas barrier film obtained by laminating an OPP layer with a thickness of 5-100µm serving as an innermost layer on one side of an aluminum deposition PET film produced by providing a 1-10 nm aluminum deposition-layer on one side of a PET base film with a thickness of 10-100 µm and laminating a PE layer with a thickness of 10-50 µm serving as a bonding layer on the other side.

The cartridge body 2 of cartridge 1B can be molded by inserting such a gas barrier film into the mold in a position corresponding to the interior periphery of the cylindrical body and injecting molten PE into the mold.

In cartridge 1B, the same components as in cartridge 1A can be used for the nozzle 4 and the plunger 3 inserted into the bottom of the cartridge body 2. It should be noted that when the contents filling the cartridge comprise solvents etc., it is preferable to use a plunger 3 made of metal or a plunger 3 in which at least the pressure-application surface 11 is formed from the same material as the above-mentioned cartridge body 2.

At the time of use, the above-described cartridges 1A and 1B are used to discharge the contents by breaking the seal film 10 to open the cylindrical opening portion, attaching the nozzle 4, and pushing the plunger 3 inside toward the top end of the cartridge body 2.

Although the cartridge allows for various viscous fluid materials to be filled, stored, and discharged as the contents, the cartridge is suitable for use as a cartridge filled with a moisture-curable composition, such as a sealing agent, and especially a silicone-, silicone modified-, or polyurethane-based sealing agent.

The above-described inventive cartridge for viscous fluid materials offers high productivity and cost reductions because it permits integral molding of the cartridge body with the location of the gas barrier layer arranged in its cylindrical barrel using a single molding process.

In addition, because the cylindrical barrel portion of the cartridge body is enclosed in the gas barrier layer comprising a metal thin layer, it has excellent gas barrier properties, in particular, moisture barrier properties.

Moreover, unlike wrapping a gas barrier film around the barrel portion, no external appearance defects, such as wrinkles and air inclusions (air bubbles remaining between the film and the cylindrical barrel portion), are generated because the gas barrier layer is made integrally with the cylindrical barrel portion of the cartridge body using insert injection molding even when the gas barrier layer 8 is laminated on the exterior periphery of the cartridge body, as in case of the above-mentioned cartridge 1A.

Furthermore, when the gas barrier layer is laminated on the interior periphery of the cartridge body, as in the above-mentioned cartridge 1B, even if the injection molding resin constituting the primary molding material of the cartridge body is a material that readily exhibits interaction with the contents, the plastic layer made up of the injection molding resin is protected from the contents by the gas barrier layer and, as a result, a cartridge is obtained that provides high durability to the contents or high storage stability for the contents.

### Examples

The moisture permeability of the inventive cartridge, as well as the storage stability of sealing agents (micro-particles of cured material, foaming), were investigated to confirm the effects of the invention.

### (Example 1)

A cartridge body A having a cylindrical barrel portion provided with a gas barrier layer 8 on its exterior periphery, such as the one shown in Fig. 1 and Fig. 2, was fabricated by insert injection molding using polyethylene resin as the injection molding resin and a composite film having a layered structured obtained by laminating a PE layer, AL foil, a PET layer, and an OPP layer as an insert film for a gas barrier layer.

The resultant cartridge body 1A has a shape, in which one end of the cylindrical barrel portion is covered with a lid portion 6 provided with a cylindrical opening portion (discharge portion) in the center thereof, with the body having an internal diameter of 48 mm, a total inner length of 213 mm, and a volume of approximately 381 mm³. Its cross-sectional structure is a layered structure, in which there is a plastic layer 7 made entirely of high-density polyethylene resin, the wall thickness of the cylindrical barrel portion is 1.15 mm, and a gas barrier layer made up of a PE bonding layer, an AL foil layer, a PET layer, and an outermost OPP layer is provided on the exterior periphery thereof.

The cylindrical opening portion 9 of cartridge body A is sealed by fusing a seal film 10 made up of aluminum laminated film to the interior surface of the lid portion 6. A tapered nozzle 4 made of low-density polyethylene is threadedly engaged with the cylindrical opening portion 9.

In order to enhance airtightness when fitting the pressing plunger inside the interior surface of the opening portion at the other end of cartridge body A, a mixture of polybutene and microcrystalline wax (mixing ratio: 6 : 4) is applied to a region extending up to 50 mm from the other end of the interior peripheral surface of the cartridge body.

### (Example 2)

A cartridge body B having a cylindrical barrel portion provided with a gas barrier layer on the interior periphery thereof, such as the one shown in Fig. 1 and Fig. 3, was fabricated by insert injection molding using the same injection molding resin and composite film as in Example 1.

The shape and dimensions of the resultant cartridge body B were identical to those of Example 1. Its cross-sectional structure, however, was a layered structure, wherein a gas barrier layer made up of a PE bonding layer, an AL foil layer, a PET layer, and an innermost OPP layer was provided on the interior periphery of the cylindrical barrel portion.

In the same manner as in Example 1, cartridge body B had a seal film 10 fused to the lid portion 6, a threadedly engaged nozzle 4, and a mixture of polybutene and microcrystalline wax (mixing ratio: 6 : 4) applied to the interior peripheral surface of the opening portion at the other end.

### (Comparative Example 1)

A cartridge body C with a cylindrical barrel portion that did not have a gas barrier layer was fabricated by insert injection molding using the same injection molding resin and lid portion as in Example 1, but without using the composite film.

The shape and dimensions of the resultant cartridge body C were identical to those of Example 1. However, its cross-sectional structure did not have a gas barrier layer.

In the same manner as in Example 1, cartridge body C had a seal film 10 fused to the lid portion 6, a threadedly engaged nozzle 4, and a mixture of polybutene and microcrystalline wax (mixing ratio: 6 : 4) applied to the interior peripheral surface of the opening portion at the other end.

### <Tests>

### (1) Moisture permeability of cartridge

The cartridge bodies obtained in Examples 1 and 2 and in Comparative Example 1 were filled with 30g of calcium chloride and tightly sealed by fitting therein a pressing plunger 3 with a wall thickness of 1.1 mm made of the same high-density polyethylene as each of the cartridge bodies. The cartridges were held for 20 weeks at a temperature of 40°C under an atmosphere that had a relative humidity of 90%, whereupon moisture permeability (mg) was obtained from the increase in weight.

### (2) Storage stability of moisture-curable sealing agents

### [Preparation of Moisture-Curable Silicone Sealing Agents and Aging Procedures]

A dealcoholation-type moisture-curable silicone sealing agent A was prepared by mixing 50 parts by weight of a polydimethylsiloxane with a viscosity of 17000 mPa-s at 25°C having both terminal ends of the molecular chain blocked with dimethylhydroxysiloxy groups, 50 parts by weight of calcium carbonate (prepared by precipitation, with a BET specific surface area of 18 m²/g and surface-treated with fatty acid), 3.0 parts by weight of methyltrimethoxysilane, and 1.0 part by weight of di(isopropoxy)titanium-di(ethylacetoacetate) to homogeneity at room temperature. Here, the term "BET specific surface area" refers to a BET specific surface area obtained by the nitrogen adsorption method. In addition, the term "dealcoholation-type" refers to a type, wherein alcohol is obtained as a reaction by-product when cured, with the alcohol in many cases capable of forming gas bubbles in the sealing agent by vaporization.

The cartridge bodies A of Example 1 were filled with the above-described moisture-curable silicone sealing agent A and tightly sealed by fitting, in the opening section, a pressing plunger 3 with a wall thickness of 1.1 mm fabricated by injection molding using the same high-density polyethylene as the cartridge bodies A. The cartridges A filled with such a silicone sealing agent were left to stand for 4 weeks, 8 weeks, 12 weeks, 16 weeks and 20 weeks under an accelerated aging condition at a temperature of 40°C that had a relative humidity of 90%. The tests described below were performed on cartridges after each aging period to inspect for the presence of cured material and forming. In addition, the same tests were conducted on cartridge bodies obtained in other examples and in the Comparative Example.

### [Inspection for Cured Material]

The moisture-curable silicone sealing agent A that had been stored under the accelerated aging condition for a predetermined period of time as described above, was discharged from the cartridges A and visually examined for the presence of micro-particles of cured material.

### [Inspection for Foaming]

A joint was provided by arranging two 12 mmx50 mmx6 mm (width x length x height) strips of backup material parallel to each other, with an interval of 12 mm, on a 50 mm×50 mm×5 mm glass test panel. The glass test panel was placed in an oven at 50°C and removed from the oven 24 hours later, whereupon the moisture-curable silicone sealing agent A that had been held for the predetermined period of time under the same conditions as in the above-described storage stability test (2), was immediately applied into the joint and, after touching it up with a spatula, the silicone sealing agent was then cured by keeping it for 7 days at a temperature of 25°C under an atmosphere that had a relative humidity of 50%. Subsequently, the interface between the silicone sealing agent and the glass test panel was examined for the presence of air bubbles.

### (3) Storage stability of hydrocarbon oil-containing sealing agents

### [Preparation of Hydrocarbon Oil-Containing Moisture-Curable Silicone Sealing agents and Aging Procedures]

A dealcoholation-type moisture-curable silicone sealing agent B was prepared by mixing 50 parts by weight of a polydimethylsiloxane with a viscosity of 17000 mPa-s at 25°C having both terminal ends of the molecular chain blocked with dimethylhydroxysiloxy groups, 15 parts by weight of liquid paraffin (HYDROSEAL G 400H from TOTAL SOLVENTS), 50 parts by weight of calcium carbonate (prepared by precipitation, with a BET specific surface area of 18 m²/g and surface-treated with fatty acid), 3.0 parts by weight of methyltrimethoxysilane, and 1.0 part by weight of di(isopropoxy)titanium-di(ethylacetoacetate) to homogeneity at room temperature.

The cartridge bodies B obtained in Example 2 were filled with the above-described moisture-curable silicone sealing agent B and tightly sealed by fitting, in the opening section, a pressing plunger 3 with a wall thickness of 1.1 mm fabricated by injection molding using the same high-density polyethylene as the cartridge bodies B. The cartridges B filled with such a silicone sealing agent were held for 240 hours, 550 hours, 840 hours, and 1200 hours under an accelerated aging condition at a temperature of 25°C that had a relative humidity of 50%. The tests described below were run on cartridges after each aging period to inspect for the change of cartridge body total length and presence of liquid paraffin. In addition, the same tests were conducted on cartridge bodies obtained in Example 1 and in Comparative Example 1.

### [Inspection for Change of Cartridge Body Total Length]

The total length in the longitudinal direction of the cylindrical barrel portions of the cartridge bodies A-C filled with the moisture-curable silicone sealing agent B prior to holding them was subjected to measurement. The measured values were used as the initial total length (mm) of the cartridge bodies.

Subsequently, the total length of the cartridge bodies A-C filled with the silicone sealing agent, which had been stored for a predetermined period of time, as mentioned above, under the accelerated aging condition, was subjected to measurement and expressed as a difference (mm) from the initial total length of the cartridge bodies.

### [Inspection for Liquid Paraffin]

The cartridge bodies A-C filled with the silicone sealing agent were left to stand for 1200 hours, whereupon the cartridge bodies were cut in two to check for air penetration and presence of cured material around the plunger. Because when air penetration was present, voids were generated inside the cartridge and liquid paraffin separated from the sealing agent at the interface with the voids bled out, air penetration was determined by visually checking for the presence of liquid paraffin separation.
At such time, cases wherein no liquid paraffin separation was found around the plunger were designated as "o"; cases wherein slight separation was found were designated as "Δ"; and cases wherein clear separation was found were designated as "×".

Moreover, examination was conducted to determine whether any cured material was present in the moisture-curable silicone sealing agent B of the severed cartridge bodies.

### <Test Results>

Table 1 below lists the results obtained by examining the cartridge bodies A-C fabricated in the Examples and in the Comparative Example to determine their moisture permeability, the presence of micro-particles of cured moisture-curable silicone sealing agent A contained in the cartridges, and the presence of foaming.

The cartridge of Example 1, which utilizes a cartridge body A having a gas barrier layer provided on the exterior periphery of the cylindrical barrel portion, and the cartridge of Example 2, which utilizes a cartridge body B having a gas barrier layer provided on the exterior periphery of the cylindrical barrel portion, have low moisture permeability, with no cured material produced inside the cartridges and no sealing agent foaming occurring in the test panel joint even after leaving the cartridges to hold for 20 weeks under accelerated aging conditions.

By contrast, the cartridge of Comparative Example 1, which utilized cartridge body C that had no gas barrier layer 8 provided in the cylindrical barrel portion, exhibited high moisture permeability, produced sealing agent foaming after holding for 12 weeks, and produced cured material in the cartridge after holding for 16 weeks under the accelerated aging conditions.

Furthermore, Table 1 lists the results obtained by examining the cartridge bodies A-C prepared in the Examples and in the Comparative Example to determine the total length of the cartridges after holding for the prescribed time, air penetration, and the presence of micro-particles of cured moisture-curable silicone sealing agent B contained in the cartridges.

The cartridge of Example 2, which utilized cartridge body B having a gas barrier layer provided on the interior periphery of the cylindrical barrel portion, and that of Example 1, which utilized cartridge body A having a gas barrier layer provided on the exterior periphery of the cylindrical barrel portion, exhibited a change of below than 1 mm in the total length of the cartridge body even after holding for 1200 hours under accelerated aging conditions. Moreover, there was almost no liquid paraffin exudate generated due to air penetration around the plunger and no cured material was produced inside the cartridge even after holding for 1200 hours under accelerated aging conditions. In particular, cartridge body B used in Example 2, which had a gas barrier layer provided on the interior periphery of the cylindrical barrel portion, revealed no liquid paraffin exudate due to air penetration and thus had extremely good gas barrier properties.

By contrast, after holding for 840 hours under accelerated aging conditions, the cartridge of Comparative Example 1, which utilized cartridge body C having no gas barrier layer in the cylindrical barrel portion, exhibited a change of over 1 mm in the total length of the cartridge body. Moreover, there was liquid paraffin exudate generated due to air penetration around the plunger and cured material was produced inside the cartridge after holding for 1200 hours under accelerated aging conditions.

**Table 1**

| | Example 1 | | Example 2 | | Comparative Example 1 | |
|---|---|---|---|---|---|---|
| Moisture permeability (mg) | 60 | | 60 | | 450 | |

| Long-term storage stability | Cured | Foaming | Cured | Foaming | Cured | Foaming |
|---|---|---|---|---|---|---|
| After 2 weeks | No | None | No | None | No | None |
| After 4 weeks | No | None | No | None | No | None |
| After 8 weeks | No | None | No | None | No | None |
| After 12 weeks | No | None | No | None | No | Yes |
| After 16 weeks | No | None | No | None | Yes | Yes |
| After 20 weeks | No | None | No | None | Yes | Yes |
| Total length of cartridge body (mm): Initial | 216.7 | | 216.7 | | 216.3 | |
| After 240 hours | 0.2 | | 0.0 | | 0.3 | |
| After 550 hours | 0.3 | | 0.1 | | 0.7 | |
| After 840 hours | 0.5 | | 0.0 | | 1.1 | |
| After 1200 hours | 0.7 | | 0.1 | | 1.4 | |
| Aeration | Δ | | o | | × | |
| Cured material | None | | None | | Yes | |

## Claims

1. A cartridge for viscous fluid materials, wherein a plunger used for dispensing contents filling a cartridge body is inserted in the bottom side of the cartridge body fabricated using insert injection molding by integrally molding a cylindrical barrel portion of a multilayer structure in which a gas barrier layer comprising a metal thin layer is laminated on the exterior periphery or interior periphery of a plastic layer used to maintain the shape and strength of the cylindrical barrel portion itself, and a lid covering the top of said cylindrical barrel portion.

2. The cartridge for viscous fluid materials according to claim 1, wherein the gas barrier layer comprising the metal thin layer is laminated on the exterior periphery of the plastic layer of the cylindrical barrel portion.

3. The cartridge for viscous fluid materials according to claim 1, wherein the gas barrier layer comprising the metal thin layer and a layer producing no interaction with the contents or allowing no components from the contents to pass therethrough is laminated on the interior periphery of the plastic layer of the cylindrical barrel portion.

4. The cartridge for viscous fluid materials according to claim 3, wherein the cylindrical barrel portion and the lid portion are formed using injection molding by injecting PE, the layer producing no interaction with the contents or allowing no components from the contents to pass therethrough is formed from any one of polyesters, polyamides, polyacrylic resins, heat-curable epoxy resins, UV-curable epoxy resins, or mixed resins of two or more components selected therefrom, and the contents include at least one component selected from organic solvents, hydrocarbon oils, and ketones.

5. The cartridge for viscous fluid materials according to any one of claims 1 through 4, which is filled with a moisture-curable composition.
